# EUROPÄISCHE PATENTSCHRIFT

(11) **EP 0 374 135 B1**
(45) Veröffentlichungstag und Bekanntmachung des Hinweises auf die Patenterteilung: **28.04.1993**
(21) Anmeldenummer: 90103490.0
(22) Anmeldetag: 14.02.1987
(51) Int. Cl.: F16L 37/08

(54) **Steckverbindungsvorrichtung mit Verdrehsicherung**
Plug-in connection device with a torsional lock
Dispositif de connexion enfichable avec verrouillage de torsion

(30) Priorität: 18.02.1986 DE 3605016
(43) Veröffentlichungstag der Anmeldung: 20.06.1990
(62) Teilanmeldung aus: 87102124.2
(73) Patentinhaber: Armaturenfabrik Hermann Voss GmbH + Co., 51688 Wipperfürth (DE)
(72) Erfinder: Rösch, Volker, Dr., D-4330 Mülheim/Ruhr (DE); Hester, Hilmar, D5272 Wipperfürth (DE)
(74) Vertreter: Patentanwälte Dr. Solf & Zapf

(56) Entgegenhaltungen:
- EP-A- 0 185 802
- DE-U- 8 519 900
- US-A- 3 598 430
- US-A- 3 937 547

## Beschreibung

Die vorliegende Erfindung betrifft eine Steckverbindungsvorrichtung für Druckmittelleitungen, insbesondere zum Anschluß von Bremsleitungen an einen Bremsventilkörper eines pneumatischen Kraftfahrzeug-Bremssystems, bestehend aus einem Gehäuse und einem in eine Einstecköffnung einer Anschlußbohrung des Gehäuses mit seinem Steckerschaft einsteckbaren Stecker mit einer Durchgangsbohrung, wobei der Stecker im Gehäuse durch Halteelemente in axialer Richtung gegen Verschieben fixiert und mittels einer zwischen dem Steckerschaft und dem Gehäuse angeordneten Umfangsdichtung abgedichtet ist, wobei die Halteelemente aus mindestens zwei an einem auf dem Steckerschaft sitzenden Ringstück angeformten und in radialer Richtung federelastischen Rastarmen bestehen, die im eingesteckten Zustand des Steckers Rastkanten des Gehäuses axial formschlüssig hintergreifen.

Eine derartige, als Rohrkupplung ausgebildete Steckverbindungsvorrichtung ist aus der US-A-3 245 703 bekannt.

Hierbei sitzt das die Rastarme tragende Ringstück in einer Ringnut des Steckers, und auch die Rastarme greifen mit Rastansätzen in eine Innenringnut im Einsteckbereich der Anschlußbohrung ein. Hierdurch wird ausschließlich in axialer Richtung ein Formschluß erreicht; die beiden Teile der Steckverbindungsvorrichtung können sich jedoch gegeneinander verdrehen. Derartige Verdrehungen führen insbesondere im fortgesetzten Wiederholungsfall zu einer erhöhten Beanspruchung von Dichtungselementen sowie der aus Kunststoff bestehenden Steckverbindungsteile selbst und auch der angeschlossenen (Kunststoff-) Leitung(en), so daß hier die Gefahr von Undichtigkeiten vorhanden ist.

Der vorliegenden Erfindung liegt die Aufgabe zugrunde, die bekannte Steckverbindungsvorrichtung derart zu verbessern, daß die vorstehenden Nachteile beseitigt werden und eine Festlegung des Steckers im Gehäuse gegen Verdrehung gewährleistet ist, und zwar mit konstruktiv einfachen Mitteln, die insbesondere für die Herstellung in Verbindung mit Kunststoffteilen geeignet sind.

Erfindungsgemäß wird dies dadurch erreicht, daß das die Rastarme aufweisende Ringstück in umfänglicher Richtung formschlüssig auf dem Steckerschaft sitzt, wobei die Rastarme formschlüssig in Durchbrüche des Gehäuses einrasten.

Durch die Erfindung ist damit ein mittelbarer Formschluß zwischen dem Steckerschaft und dem Gehäuse über das Ringstück und die Rastarme vorhanden, wobei das Ringstück formschlüssig mit dem Steckerschaft und die Rastarme formschlüssig mit dem Gehäuse verbunden sind. Damit ist vorteilhafterweise ein Verdrehen des Steckers in dem Gehäuse absolut ausgeschlossen.

Vorteilhafte Ausgestaltungen der Erfindung sind in den Unteransprüchen enthalten.

Anhand der in den beiliegenden Zeichnungen dargestellten Ausführungsbeispiele wird die Erfindung nunmehr näher erläutert. Es zeigen:
- Fig. 1: in der unteren und oberen Hälfte jeweils einen Teil-Längsschnitt durch eine erste Ausführungsform einer erfindungsgemäßen Steckverbindungsvorrichtung, wobei nur in der oberen Hälfte eine Sicherungskappe dargestellt ist,
- Fig. 2: einen Querschnitt entlang der Schnittlinie II-II in Fig. 1,
- Fig. 3: in der unteren und oberen Hälfte jeweils einen Teil-Längsschnitt durch ein zweites Ausführungsbeispiel einer erfindungsgemäßen Steckverbindungsvorrichtung, wobei eine Sicherungskappe wiederum nur in der oberen Hälfte dargestellt ist, und
- Fig. 4: einen Querschnitt entlang der Schnittlinie IV-IV in Fig. 3.

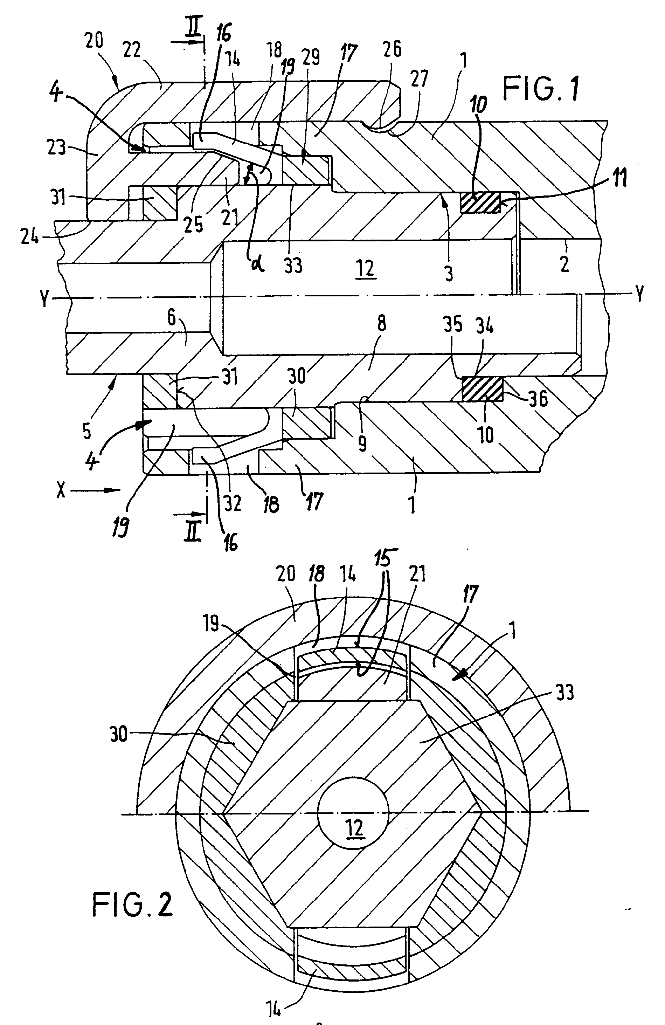

Wie in Fig. 1 dargestellt ist, besteht eine erfindungsgemäße Steckverbindungsvorrichtung aus einem Gehäuse 1, insbesondere dem Gehäuse eines Ventilkörpers. In diesem Gehäuse 1 befinden sich eine oder mehrere Anschlußbohrungen 2, die einen im Durchmesser vergrößerten Aufnahmeabschnitt 3 aufweisen, der in einer Einstecköffnung 4 an der Gehäuseaußenseite endet. Die Steckverbindungsvorrichtung umfaßt weiterhin einen Stecker 5. Dieser Stecker 5 weist einendig einen Steckerschaft 6 und anderendig einen nicht dargestellten Anschlußdorn für eine Druckmittelleitung, z.B. eine Bremsleitung eines pneumatischen Kraftfahrzeug-Bremssystems, auf. Der Steckerschaft 6 ist in den Aufnahmeabschnitt 3 einsteckbar und besitzt einen in Einsteckrichtung, siehe Pfeil X, gesehen vorderen Schaftbereich 8 mit rundem Querschnitt, dessen Außendurchmesser etwa dem Innendurchmesser eines diesem Schaftbereich 8 zugeordneten Führungsabschnittes 9 des Aufnahmeabschnittes 3 entspricht. Auf der Mantelfläche des vorderen Schaftbereichs 8 ist eine Umfangsdichtung aus einem O-Dichtring 10 und einer diesen aufnehmenden Ringnut 11 (obere Figurenhälfte) angeordnet, die die Steckverbindung nach außen abdichtet. Der Stecker 5 besitzt eine Durchgangsbohrung 12, die im eingesteckten Zustand des Steckers gleichachsig zur Anschlußbohrung 2 verläuft. Die Steckverbindungsvorrichtung ist als Kunststoffverbindung ausgebildet, d.h. sowohl das Gehäuse 1 als auch der Stecker 5 bestehen aus Kunststoff. Wesentlich ist, daß bei derartigen Kunststoffverbindungen sichergestellt wird, daß der Stecker 5 im Gehäuse 1 verdrehsicher im eingesteckten Zustand gehalten wird. Hierzu weist der Stecker 5 zwei Rastarme 14 auf, die vor dem Schaftbereich 8 am Steckerschaft 6 angeordnet sind. Diese Rastarme 14 haben einen etwa rechteckigen Querschnitt mit jedoch kreisbogenförmig verlaufenden Längskanten 15, siehe Fig. 2. Ausgehend vom Steckerschaft 6 erstrecken sie sich unter einem spitzen Winkel α zur Längsachse Y-Y des Steckerschaftes 6 nach außen und weisen an ihrem freien Ende einen parallel zur Steckerlängsachse Y-Y verlaufenden Abschnitt 16 auf. Die beiden Rastarme 14 sind einander gegenüberliegend am Steckerschaft 6 gehaltert. Die Rastarme 14 sind derart geformt, daß sie in radialer Richtung federelastisch sind.

Wie aus Fig. 1 ersichtlich ist, weist das Gehäuse 1 in der Wandung 17 des Aufnahmeabschnittes 3 Durchbrüche 18 auf, in die die Rastarme 14 im eingesteckten Zustand des Steckers 5 einrasten, weshalb Die Durchbrüche 18 in ihrem Öffnungsquerschnitt den Abmessungen der Rastarme 14 derart angepaßt sind, daß ein Verdrehen des Steckers im Gehäuse nicht möglich ist. Gleichzeitig stellen die Rastarme 14 auch eine Sicherung gegen axiale Verschiebung des Steckers im Gehäuse dar. Dabei wird die Längsverschiebung einerseits durch die Endflächen der Rastarme 14 an ihren freien Enden gewährleistet, die mit der gegenüberliegenden Innenfläche des Durchbruchs 18 einen Anschlag bilden, und zwar bei einer Zugbeanspruchung des Steckers. Die Lagebegrenzung des Steckers innerhalb des Gehäuses 1 erfolgt durch Anlage der Stirnfläche des Steckers am Bohrungsgrund des Aufnahmeabschnittes 3.

Wie aus den Fig. 1 und 2, jeweils obere Hälfte, zu ersehen ist, sind jeweils im Bereich unterhalb der Rastarme 14 um 180° zueinander versetzt angeordnete Längsausnehmungen 19 gebildet. In diese Längsausnehmungen 19 ragen an einer Sicherungskappe 20 angeformte Fortsätze 21, die einen kreisbogenförmigen Querschnitt besitzen. Die Sicherungskappe 20 umfaßt mit ihrer Außenwandung 22 das Gehäuse 1 und weist in ihrem Kappenboden 23 eine Öffnung 24 auf, durch die der Steckerschaft 6 verläuft. Im aufgeschobenen Zustand der Sicherungskappe 20 auf dem Gehäuse 1 schieben sich die Fortsätze 21 unter die Rastarme 14, so daß diese nicht radial nach innen einfedern können und somit in ihrer Einraststellung fixiert werden. Zweckmäßigerweise sind die Fortsätze 21 an ihrem freien Ende entsprechend dem Verlauf der Rastarme 14 abgeschrägt, so daß sich eine Anlagefläche 25 ergibt. Die Sicherungskappe 20 weist zu ihrer unverlierbaren Arretierung auf dem Gehäuse 1 am freien Ende ihrer Außenwandung 22 am inneren Umfang einen Ringwulst 26 auf, der im aufgeschobenen Zustand der Sicherungskappe 20 in eine äußere Umfangsnut 27 des Gehäuses 1 einschnappt, so daß die Sicherungskappe 20 gegen Verschiebung in axialer Richtung gesichert ist. Die Sicherungskappe 20 besteht ebenfalls aus Kunststoff.

Zum Verbinden der erfindungsgemäßen Steckverbindungsvorrichtung braucht demgemäß der Stecker 1 nur in den Aufnahmeabschnitt 3 eingesteckt zu werden, wobei aufgrund der entsprechenden Dimensionierung und Anordnung der Rastarme 14 diese in die Durchbrüche 18 einrasten, bevor die Stirnfläche des Steckers 5 im Grund des Aufnahmeabschnittes 3 zur Anlage kommen kann. Anschließend kann zur weiteren Absicherung der erfindungsgemäßen Steckverbindung noch die Sicherungskappe 20 unverlierbar aufgeschoben werden, die auch gleichzeitig eine Abdeckung gegen Schmutzeintritt darstellt.

In den Fig. 1 und 2, untere Hälfte, ist eine Ausführung ohne Sicherungskappe 20 dargestellt.

Gemäß Fig. 1 und 2 bilden die Rastarme 14 nun erfindungsgemäß mit einem separaten Ringstücke 29 eine Einheit, die auf den Steckerschaft 6 aufgeschoben ist. Das Ringstück 29 und die Sicherungskappe 20 sitzen gemeinsam unverlierbar auf dem Stecker 5. Dieses Ringstück 29 besteht aus einem Hohlzylinderabschnitt 30 und einem umlaufenden Innenkragen 31, der im aufgeschobenen Zustand gegen eine Stufenfläche 32 des Steckerschaftes 6 anliegt. Der Hohlzylinderabschnitt 30 besitzt einen Innenraum mit sechseckigem Querschnitt, und der Steckerschaft 6 weist einen Schaftbereich 33 mit einem dem Innenraum angepaßten, sechseckigen Querschnitt auf, der sich von der Stufenfläche 32 aus entsprechend der Länge des Ringstückes 29 erstreckt. Durch diese Ausbildung wird ein Formschluß zwischen dem Ringstück 29 und dem Steckerschaft 6 aufgrund des Zusammenwirkens von Innensechskant und Außensechskant erreicht, der ein Verdrehen der beiden Teile gegeneinander verhindert. Die Verdrehsicherung des Steckers 5 gegenüber dem Gehäuse 1 wird durch die Rastarme 14 bewirkt, wie dies bereits beschrieben wurde. Dabei bewirken die Rastarme 14 auch die axiale Sicherung des Steckers gegen Verschieben, und zwar im Zusammenwirken mit den Anlageflächen des Gehäuses. Die Längsausnehmungen 19 für die Aufnahme der Fortsätze 21 der Sicherungskappe 20 sind im Ringstück 29 ausgebildet. Das Ringstück 29 ist zweckmäßigerweise ebenfalls aus Kunststoff gefertigt.

In Fig. 1 und 2, untere Hälfte, ist weiterhin noch eine Variante in bezug auf die Anordnung der Umfangsdichtung des Steckers 5 sowie ohne die Sicherungskappe 20 dargestellt. Hier befindet sich der Dichtring 10 in einem Ringraum 34, der zwischen einer Stufe 35 im Sinne einer Durchmesserverringerung des Steckerschaftes 6 und einer Stufe 36 im Sinne einer Durchmesservergrößerung des Aufnahmeabschnittes 3 gebildet wird. Bei dieser Ausführung erstreckt sich der Steckerschaft 6 bis in die Anschlußbohrung 2 hinein.

Es sei noch erwähnt, daß die Verbindung der Steckverbindungsvorrichtung einfach durch Einstecken des Steckers 5 zusammen mit dem aufgeschobenen Ringstück 29 erfolgen kann, wobei erfindungsgemäß eine mittelbare Formschlußverbindung mit dem Gehäuse 1 über das Ringstück 29 erfolgt. Dabei wird durch einfaches Einstecken sowohl die Verdrehsicherung als auch die Verschiebesicherung in axialer Richtung erreicht.

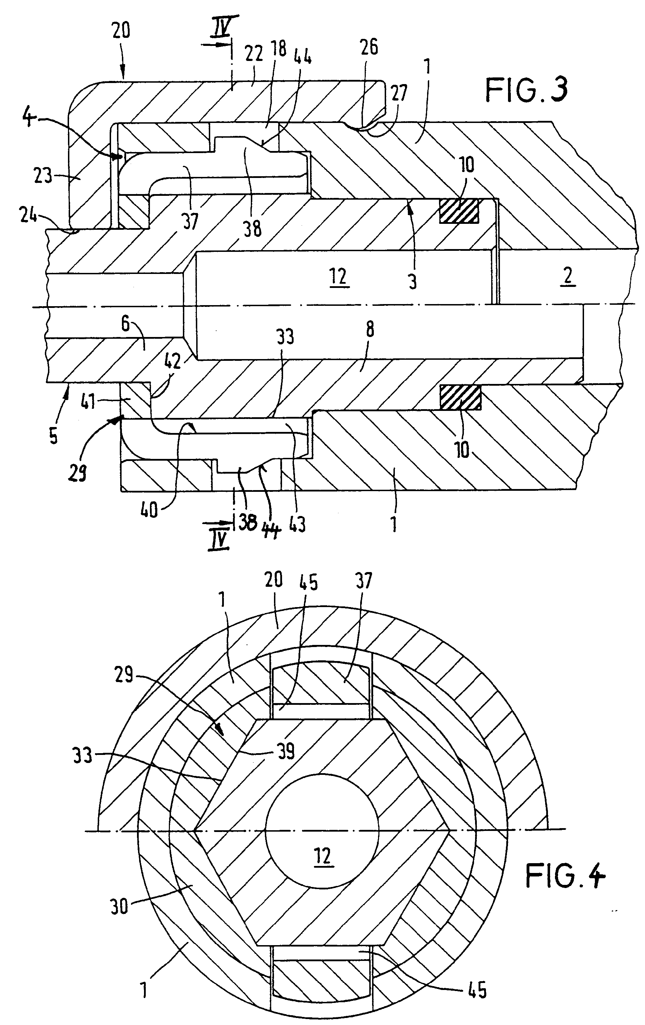

Die Fig. 3 und 4 zeigen eine weitere Ausführungsform der erfindungsgemäßen Steckverbindungsvorrichtung. Hierbei sind gleiche Teile wie in den Fig. 1 und 2 mit denselben Bezugszeichen versehen. Im Unterschied zu den Fig. 1 und 2 sind hier die Rastarme und dadurch bedingt auch die Sicherungskappe unterschiedlich ausgebildet. Wie im Ausführungsbeispiel gemäß den Fig. 1 und 2 besitzt der Steckerschaft 6 einen Schaftbereich 33 mit sechseckigem Querschnitt, auf dem formschlüssig das Ringstück 29 mit seinem Innensechskant sitzt, dessen Rastarme 37, die einander diametral gegenüberliegen und an ihrer Außenseite Eingriffsnocken 38 besitzen, in die Durchbrüche 18 hineinragen, wodurch der Stecker 5 gegenüber dem Gehäuse 1 in Längsrichtung sowie in Verdrehrichtung fixiert ist. Das Ringstück 29 besteht aus einem Zylinderabschnitt 40 mit dem Innensechskant 39, so daß der Zylinderabschnitt formschlüssig auf dem Schaftbereich 33 sitzt. Einendig weist der Zylinderabschnitt 40 einen radial nach innen ragenden Ringkragen 41 auf, der den Steckerschaft 6 umschließend auf diesem unverlierbar angeordnet ist und dabei gegen eine Übergangsstufe 42 zum Schaftbereich 33 anliegt. An dem Ringkragen 41 sind die flexiblen Rastarme 37 angeformt, die etwa parallel zur Steckerlängsachse verlaufen und auf ihrer Außenseite die Eingriffsnocken 38 besitzen, die eine in Richtung auf das freie Ende der Rastarme 37 abfallende Schrägfläche 44 aufweisen und in die Durchbrüche 18 hineinragen. Im Bereich 43 unterhalb der Rastarme 37 ist der Zylinderabschnitt durch Längsschlitze 45 geteilt. Die unverlierbare Sicherungskappe 20 umschließt das Gehäuse 1 mit ihrer zylindrischen Außenwandung 22, wie bereits oben beschrieben. Ihr Kappenboden 23 weist die Durchtrittsöffnung 24 für den Steckerschaft 6 auf, deren Durchmesser dem Außendurchmesser des Schaftes 6 in diesem Schaftbereich etwa entspricht.

In der unteren Hälfte von Fig. 3 und 4 ist eine alternative Umfangsabdichtung zu der Abdichtung in der oberen Figurenhälfte dargestellt, wozu auf die Ausführungen zu Fig. 1 und 2 verwiesen werden kann. Weiterhin ist darauf hinzuweisen, daß in den Fig. 1, 2 und 3, 4 jeweils Abweichungen zwischen der unteren und der oberen Figurenhälfte darin bestehen, daß in den unteren Hälften die Ausführung ohne Sicherungskappe dargestellt ist. Wie bereits ausgeführt, besitzt die Sicherungskappe 20 einerseits die Funktion, ein Einfedern der Rastarme 14 bzw. 37 nach innen zu verhindern und/oder andererseits die gesamte Steckverbindung nach außen abzuschließen.

## Patentansprüche

1. Steckverbindungsvorrichtung für Druckmittelleitungen, insbesondere zum Anschluß von Bremsleitungen an einen Bremsventilkörper eines pneumatischen Kraftfahrzeug-Bremssystems, bestehend aus einem Gehäuse (1) und einem in eine Einstecköffnung (4) einer Anschlußbohrung (2) des Gehäuses (1) mit seinem Steckerschaft (6) einsteckbaren Stecker (5) mit einer Durchgangsbohrung (12), wobei der Stecker (5) im Gehäuse (1) durch Halteelemente in axialer Richtung gegen Verschieben fixiert und mittels einer zwischen dem Steckerschaft (6) und dem Gehäuse (1) angeordneten Umfangsdichtung (10) abgedichtet ist, wobei die Halteelemente aus mindestens zwei an einem auf dem Steckerschaft (6) sitzenden Ringstück (29) angeformten und in radialer Richtung federelastischen Rastarmen (14, 37) bestehen, die im eingesteckten Zustand des Steckers (5) Rastkanten des Gehäuses (1) axial formschlüssig hintergreifen,
**dadurch gekennzeichnet,** daß das die Rastarme (14, 37) aufweisende Ringstück (29) in umfänglicher Richtung formschlüssig auf dem Steckerschaft (6) sitzt, wobei die Rastarme (14, 37) formschlüssig in Durchbrüche (18) des Gehäuses (1) einrasten.

2. Steckverbindungsvorrichtung nach Anspruch 1,
**dadurch gekennzeichnet,** daß das Ringstück (29) einen sechseckigen Innenquerschnitt besitzt und auf einem einen entsprechenden sechseckigen Außenquerschnitt aufweisenden Schaftbereich (33) des Steckerschaftes (6) sitzt.

3. Steckverbindungsvorrichtung nach Anspruch 1 oder 2,
**dadurch gekennzeichnet,** daß die Rastarme (37) parallel zur Steckerlängsachse (Y-Y) verlaufen und an ihren Außenflächen in die Durchbrüche (18) hineinragende Eingriffsnocken (38) aufweisen, die an ihrem in Einsteckrichtung (X) weisenden Ende abgeschrägt sind.

4. Steckverbindungsvorrichtung nach Anspruch 3,
**dadurch gekennzeichnet,** daß die Rastarme (37) an dem Ringstück (29) von einem den Steckerschaft (6) umschließenden, radial nach innen ragenden Ringkragen (41) ausgehend angeformt sind.

5. Steckverbindungsvorrichtung nach Anspruch 3 oder 4,
**dadurch gekennzeichnet,** daß das Ringstück (29) im Bereich unterhalb der Rastarme (37) durch Längsschlitze (45) unterbrochen ist.

6. Steckverbindungsvorrichtung nach einem oder mehreren der Ansprüche 1 bis 5,
**dadurch gekennzeichnet,** daß eine Sicherungskappe (20) über die Einstecköffnung (4) geschoben ist und diese mit ihrem Kappenboden (23) abdeckt sowie mit ihrer Außenwandung (22) das Gehäuse (1) umfaßt.

7. Steckverbindungsvorrichtung nach Anspruch 1 oder 2,
**dadurch gekennzeichnet,** daß die Rastarme (14) entgegengesetzt zur Einsteckrichtung (X) und schräg zur Steckerlängsachse (Y-Y) nach außen geneigt verlaufen.

8. Steckverbindungsvorrichtung nach Anspruch 6 oder 7,
**dadurch gekennzeichnet,** daß das Ringstück (29) im Bereich unterhalb der Rastarme (14) ausgehend von der Einstecköffnung (4) Längsausnehmungen (19) aufweist, in die Fortsätze (21) der Sicherungskappe (29) eingreifen.

9. Steckverbindungsvorrichtung nach Anspruch 8,
**dadurch gekennzeichnet,** daß die Fortsätze (21) der Sicherungskappe (20) an ihren freien Enden an den Verlauf der Rastarme (14) angepaßte und diesen zugekehrte Anlageflächen (25) aufweisen.

10. Steckverbindungsvorrichtung nach einem oder mehreren der Ansprüche 6 bis 9,
**dadurch gekennzeichnet,** daß auf der Innenseite der Außenwandung (22) der Sicherungskappe (20) an dem dem Kappenboden (23) gegenüberliegenden Ende ein Ringwulst (26) ausgebildet ist, der im aufgeschobenen Zustand der Sicherungskappe (20) in einer Umfangsnut (27) des Gehäuses (1) eingerastet ist.

## Claims

1. Plug connection device for pressure medium pipes more especially for connecting brake pipes to, a.brake valve member of a motor vehicle pneumatic brake system, consisting of a housing (1) and a plug (5) which it is possible to insert, by means of its plug shaft (6), into an insert opening (4) of a connection hole (2) of the housing (1) by means of a through bore (12), wherein the plug (5) is fixed against shifting in an axial direction in the housing (1) by holding members and sealed by means of a peripheral seal (10) located between the plug shaft (6) and the housing (1), wherein the holding members consist of at least two locking arms (14,37) acting as a spring in a radial direction and formed on a ring piece (29) sitting on the plug shaft (6), which arms grip back axially form-locking the locking edges of the housing (1) when the plug (5) is inserted, characterised in that the ring piece (29) having the locking arms (14,37) is sitting in the direction of the periphery form-locking on the plug shaft (6), wherein the locking arms (14,37) snap lockingly engage into through holes (18) of the housing (1).

2. Plug connection device according to Claim 1, characterised in that the ring piece (29) has a hexagonal internal cross-section and sits on a shaft region (33) of the plug shaft (6) having a correspondence hexagonal external cross-section.

3. Plug connection device according to Claim 1 or 2, characterised in that the locking arms extend parallel to the plug's longitudinal axis (Y-Y) and have interlock cams (38) on their outer surface, which project into the through holes (18) and are bevelled on their end pointing in the direction of insertion (X).

4. Plug connection device according to Claim 3, characterised in that the locking arms (37) on the ring piece (29) are formed starting from a ring collar (4) projecting radially inwards and surrounding the plug shaft (6).

5. Plug connection device according to Claim 3 or 4, characterised in that the ring piece (29) is interrupted by elongated slots (45) in the region underneath the locking arms (37).

6. Plug connection device according to one or more of Claims 1 to 5, characterised in that a safety cap (20) is pushed over the insert opening (4) and covers this with its cap base (23) as well as surrounding the housing (1) with its external wall (22).

7. Plug connection device according to Claim 1 or 2, characterised in that the locking arms (14) extend opposite to the direction of insertion (X) and are inclined outwards at an angle to the plug's longitudinal axis (Y-Y).

8. Plug connection device according to claim 6 or 7, characterised in that the region underneath the locking arms (14) of the ring piece (29) has longitudinal recesses (19) starting from the insert opening (4) and interlocking into the extensions (21) of the safety cap (29).

9. Plug connection device according to Claim 8, characterised in that at their free ends the extensions (21) of the safety cap (20) are matched to the course of the locking arms (14) and have contact surfaces (25) facing these.

10. Plug connection device according to one or more of Claims 6 to 9, characterised in that on the inside of the external walls (22) of the safety cap (20), at the end opposite the cap base (23) is formed a toroid (26) which is locked into a peripheral groove (27) of the housing (1) when the safety cap (20) is pushed on.

## Revendications

1. Dispositif de connexion enfichable pour des conduites d'agent de pression, en particulier pour brancher des conduites de freinage sur un corps de valve de freinage d'un système de freinage pneumatique d'un véhicule automobile, comprenant un boîtier (1) et une fiche (5) munie d'un perçage traversant (12) et pouvant être introduite, par sa tige (6), dans une ouverture d'introduction (4) d'un perçage de branchement (2) du boîtier (1), la fiche (5) étant immobilisée dans la direction axiale contre un déplacement en translation dans le boîtier (1) par des éléments d'arrêt et étant étanchée au moyen d'un joint périphérique (10) disposé entre la tige d'introduction (6) et le boîtier (1), les éléments d'arrêt étant constitués par au moins deux bras encliquetables (14, 37) qui sont élastiques dans la direction radiale et moulés sur une pièce annulaire emmanchée sur la tige d'introduction (6) et qui, lorsque la fiche (5) est introduite, s'engagent axialement, de manière solidaire par leur forme, derrière des bords de verrouillage du boîtier (1), caractérisé en ce que la pièce annulaire (29) qui comporte les bras encliquetables (14, 37) est solidarisée par sa forme, dans la direction circonférentielle, sur la tige d'introduction (6), les bras encliquetables (14, 37) s'encliquetant de manière solidaire par leur forme dans des orifices (18) du boîtier (1).

2. Dispositif de connexion enfichable selon la revendication 1, caractérisé en ce que la pièce annulaire (29) possède une section transversale intérieure hexagonale et est emmanchée sur une zone (33) de la tige d'introduction (6), ladite zone de tige (33) présentant une section transversale extérieure hexagonale correspondante.

3. Dispositif de connexion enfichable selon la revendication 1 ou 2, caractérisé en ce que les bras encliquetables (37) s'étendent parallèlement à l'axe longitudinal (Y-Y) de la fiche et comportent, sur leurs surfaces extérieures, des crans d'engagement (38) qui pénètrent dans les orifices (18) et qui sont biseautés à leur extrémité orientée dans la direction d'introduction (X).

4. Dispositif de connexion enfichable selon la revendication 3, caractérisé en ce que les bras encliquetables (37) sont moulés sur la pièce annulaire (29) à partir d'une collerette annulaire (41) qui entoure la tige d'introduction (6) et fait saillie radialement vers l'intérieur.

5. Dispositif de connexion enfichable selon la revendication 3 ou 4, caractérisé en ce que la pièce annulaire (29) est interrompue par des fentes longitudinales (45) dans la zone située en dessous des bras encliquetables (37).

6. Dispositif de connexion enfichable selon l'une ou plusieurs des revendications 1 à 5, caractérisé en ce qu'un capuchon de sécurité (20) est emmanché sur l'ouverture d'introduction (4), recouvre cette dernière par son fond (23) et entoure le boîtier (1) par sa paroi extérieure (22).

7. Dispositif de connexion enfichable selon la revendication 1 ou 2, caractérisé en ce que les bras encliquetables (14) sont inclinés vers l'extérieur à l'opposé de la direction d'introduction (X) et s'étendent obliquement par rapport à l'axe longitudinal (Y-Y) de la fiche.

8. Dispositif de connexion enfichable selon la revendication 6 ou 7, caractérisé en ce que la pièce annulaire (29) comporte, dans la zone située en dessous des bras encliquetables (14), à partir de l'ouverture d'introduction (4), des évidements longitudinaux (19) dans lesquels s'engagent des prolongements (21) du capuchon de sécurité (29).

9. Dispositif de connexion enfichable selon la revendication 8, caractérisé en ce que les prolongements (21) du capuchon de sécurité (20) comportent, à leurs extrémités libres, des surfaces d'appui (25) adaptées au tracé des bras encliquetables (14) et tournées vers ces derniers.

10. Dispositif de connexion enfichable selon l'une ou plusieurs des revendications 6 à 9, caractérisé en ce que, sur le côté intérieur de la paroi extérieure (22) du capuchon de sécurité (20), à l'extrémité opposée au fond de capuchon (23), est prévu un bourrelet annulaire (26) qui, lorsque le capuchon de sécurité (20) est emmanché, est bloqué dans une gorge annulaire (27) du boîtier (1).
